# EUROPEAN PATENT APPLICATION

(11) **EP 3 441 202 A1**
(43) Date of publication of application: **13.02.2019**
(21) Application number: 18156746.2
(22) Date of filing: 14.02.2018
(51) Int. Cl.: B25J 9/16

(54) **INFORMATION PROCESSING APPARATUS, INFORMATION PROCESSING METHOD, AND PROGRAM**

(30) Priority: 10.08.2017 JP 2017155309
(71) Applicant: OMRON CORPORATION, Kyoto-shi, Kyoto 600-8530 (JP)
(72) Inventor: SHIMAKAWA, Haruna, KYOTO, 600-8530 (JP); OYA, Taku, KYOTO (JP)
(74) Representative: Ter Meer Steinmeister & Partner

(57) **Abstract**

Accurate estimation of a behavior of a target and presentation of a control program of the target are performed. An information processing apparatus includes: a storage (3, 4, 5) configured to store control programs of a plurality of targets, which control a behavior of the targets (300, 400); a display controller (15); an execution unit (31) configured to execute an emulator program configured to estimate a behavior of each of the targets; and a drawing data generation unit (19) configured to generate drawing data for drawing the behaviors of the targets estimated through execution of the emulator program of the targets in a three-dimensional virtual space, wherein the display controller controls the display so that display of a plurality of commands of at least one of the control programs of the plurality of targets and drawing representing the behaviors of the targets according to the drawing data are performed on the same screen.

## Description

### BACKGROUND

### Technical Field

The present disclosure relates to an information processing apparatus, an information processing method, and a program, and particularly to an information processing apparatus, an information processing method, and a program which estimate behaviors of a plurality of machines to be controlled.

### Description of Related Art

In the field of factory automation (FA), various automatic control technologies have been widely used. In designing or researching systems to which such automatic control technologies are applied, it is necessary to evaluate the performance of such systems in advance. To meet the needs, Japanese Laid-open Patent Application Publication No. 2017-97426 (Patent Document 1) discloses a simulation apparatus including a user interface screen in which a behavior of a system is estimated and the behavior is reproduced.

Also, Japanese Laid-open Patent Application Publication No. 2017-102620 (Patent Document 2) discloses a monitoring apparatus configured to generate simulation data of a reference image which is an image when a virtual machine performs a reference operation and a real image which is an image when the virtual machine performs a real operation.

### SUMMARY

When a control program of an actual machine related to FA included in a production line is designed, a user verifies a behavior of the machine controlled through execution of the control program and corrects the control program on the basis of the verification results. Such verification can be easily confirmed using an actual machine, but the user may execute a program for simulating a behavior according to execution of the control program of the actual machine when the actual machine cannot be used and perform verification based on the results of such execution. In such a case, there is demand for performing more accurate estimation and quickly checking a control program of an actual machine in light of the estimation results. The technologies disclosed in Patent Documents 1 and 2 cannot meet such demand. Therefore, accurate estimation of a behavior of a target may be performed and a control program for the target may be presented.

An information processing apparatus according to an aspect of the present disclosure includes: a storage configured to store control programs of a plurality of targets, which include a plurality of commands used to control a behavior of a corresponding target of the targets; a display controller configured to control a display; an execution unit configured to execute an emulator program configured to estimate a behavior of each of the targets, which includes the plurality of commands included in the control program of each of the targets; and a drawing data generation unit configured to generate drawing data for drawing the behaviors of the targets estimated through execution of the emulator program of the targets in a three-dimensional virtual space. The display controller controls the display so that display of a plurality of commands of at least one of the control programs of the plurality of targets and drawing representing the behaviors of the targets according to the drawing data are performed on the same screen.

According to an embodiment of the present disclosure, the execution unit may execute the emulator program of targets in a predetermined common period.

According to an embodiment of the present disclosure, the display controller may control the display so that a display mode of a command being executed using the execution unit is different from those of other commands among the plurality of commands of the at least one control program on the screen.

According to an embodiment of the present disclosure, the information processing apparatus further includes: a verification unit configured to verify the position of each of the targets in the three-dimensional virtual space indicated by the drawing data of the target, wherein the drawing data of each of the targets may include data indicating a position of the target in the three-dimensional virtual space, and the display controller may control the display so that the display mode of the command being executed is different from those of other commands when the verification result satisfies a predetermined condition.

According to an embodiment of the present disclosure, the predetermined condition may include a condition in which a relative relationship between targets in the three-dimensional virtual space indicates a specific positional relationship.

According to an embodiment of the present disclosure, the fact that the relative positional relationship indicates a specific positional relationship may include the fact that a distance between positions indicates a specific distance.

According to an embodiment of the present disclosure, the execution unit may stop executing the emulator program of each of the targets when the verification result satisfies a predetermined condition.

According to an embodiment of the present disclosure, the display controller may control the display so that the drawing of each of the targets according to the drawing data is stopped when the verification result satisfies a predetermined condition.

According to an embodiment of the present disclosure, the information processing apparatus further includes: a period generation unit configured to generate a signal indicating the predetermined period, wherein the period generation unit may stop generation of the signal when the verification result satisfies a predetermined condition.

According to an embodiment of the present disclosure, a program language of at least one of the control programs of the targets may be different from program languages of the control programs corresponding to other targets.

According to an embodiment of the present disclosure, the program language of the at least one control program may include a sequential execution type language.

According to an embodiment of the present disclosure, the program language of the at least one control program may include a cyclic execution type language.

According to an embodiment of the present disclosure, the information processing apparatus may further include a receiving unit configured to receive a user's input to the information processing apparatus; and an editing unit configured to edit the control program of each of the targets stored in the storage on the basis of the input received through the receiving unit.

In another aspect of the present disclosure, an information processing method for processing control programs of a plurality of targets, which include a plurality of commands used to control a behavior of a corresponding target of the targets using an information processing apparatus is provided.

This method includes: executing an emulator program configured to estimate a behavior of each of the targets, in which the emulator program includes the plurality of commands included in the control program of each of the targets; generating drawing data for drawing the behaviors of each of the targets estimated by executing the emulator program corresponding to the targets in a three-dimensional virtual space; and controlling the display so that display of a plurality of commands of at least one of the control programs of the plurality of targets and drawing representing the behaviors of the targets according to the drawing data are performed on the same screen.

In yet another aspect of the present disclosure, a program causing a computer to execute the above-described information processing method is provided.

According to the present disclosure, display of a plurality of commands of control programs of targets and drawing representing estimated behaviors of the targets estimated through execution of an emulator program including the plurality of commands are performed on the same screen. Therefore, it is possible to more accurately draw and present a behavior of each of the targets through the execution of the emulator program. Furthermore, it is possible for the user to present a plurality of commands of the emulated control program on the same screen as the screen on which the behavior is drawn.

### BRIEF DESCRIPTION OF THE DRAWINGS

FIG. 1 is a schematic diagram illustrating an example of a configuration of an online control system 1 included in a production line according to Embodiment 1.
FIG. 2 is a diagram showing a target position of each shaft of a robot 300.
FIG. 3 is a diagram schematically illustrating a process of calculating a position of a shaft corresponding to each arm of the robot 300 according to Embodiment 1 in a three-dimensional virtual space.
FIG. 4 is a diagram schematically illustrating a configuration of an information processing apparatus 100 according to Embodiment 1.
FIG. 5 is a diagram for describing an example of a configuration of a function of an offline debug system 20 according to Embodiment 1 in association with peripheral parts.
FIG. 6 is a diagram illustrating an example of a configuration of a function of a program execution unit 31 of FIG. 5.
FIG. 7 is a diagram for describing synchronization of an emulator depending on a virtual time according to Embodiment 1.
FIG. 8 is a diagram illustrating an example of a motion command according to Embodiment 1.
FIG. 9 is a diagram for describing an outline of a motion command DB 361 according to Embodiment 1.
FIGS. 10A and 10B are diagrams illustrating an example of a display screen according to
   Embodiment 1.
FIGS. 11A and 11B are diagrams illustrating an example of a display screen according to Embodiment 1.
FIG. 12 is a diagram for describing processing of an offline debug system 20 according to Embodiment 1.
FIG. 13 is a diagram for describing processing of the offline debug system 20 according to Embodiment 1.
FIGS. 14A and 14B are diagrams illustrating another example of a display screen according to Embodiment 1.
FIGS. 15A and 15B are diagrams illustrating another example of a display screen according to Embodiment 1.
FIG. 16A and 16B are diagrams illustrating another example of a display screen according to Embodiment 1.

### DESCRIPTION OF THE EMBODIMENTS

An embodiment according to the present invention will be described below with reference to the drawings. In the following description, the same parts and constituent elements are denoted with the reference numerals. Their names and functions are also the same. Therefore, detailed description of these will not be repeated. Note that embodiments and modifications described below may be appropriately and selectively combined.

### <Embodiment 1>

### [A. System configuration]

An information processing apparatus according to Embodiment 1 estimates a behavior of a machine serving as an actual machine included in a production line. In Embodiment 1, a movable stage 400 and a robot 300 configured to grasp and move a workpiece W above the stage 400 are exemplified as target machines whose behaviors are estimated in this way, but target machines are not limited thereto. An example of an environment in which the target machines are provided as actual machines will be described.

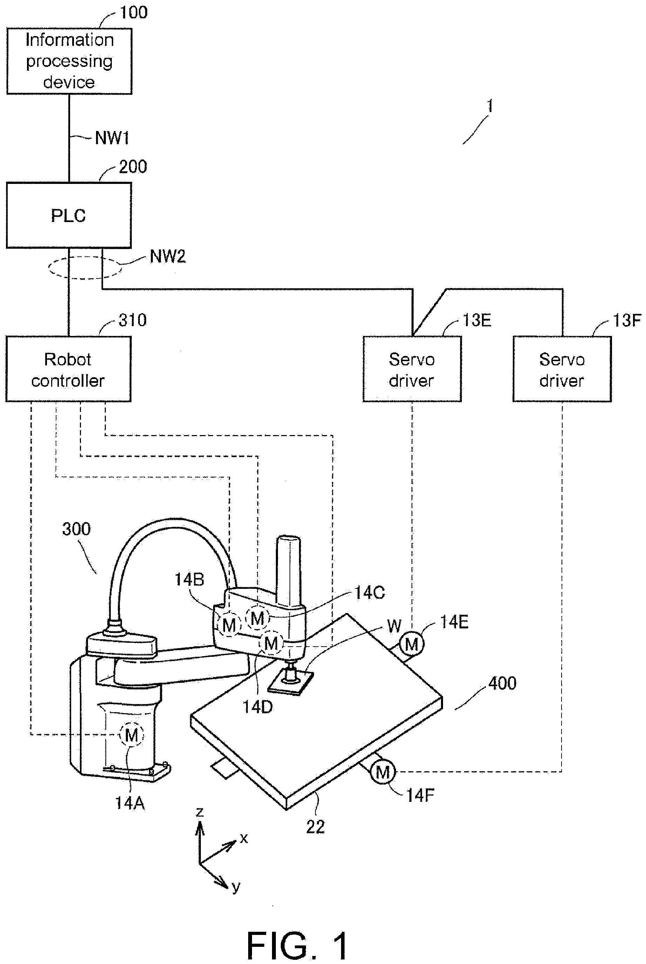

FIG. 1 is a schematic diagram illustrating an example of a configuration of an online control system 1 included in the production line according to Embodiment 1. Referring to FIG. 1, the online control system 1 (hereinafter simply referred to as a "control system 1") includes the information processing apparatus 100, a programmable logic controller (PLC) 200 serving as an example of a controller, a robot controller 310 configured to control the robot 300, and servo drivers 13E and 13F. The information processing apparatus 100 includes, for example, a terminal apparatus such as a personal computer (PC) and a tablet terminal. The servo drivers 13E and 13F (hereinafter also collectively referred to as a "servo drivers 13") drive corresponding servomotors 14E and 14F.

The information processing apparatus 100 is connected to the PLC 200 via a field network NW1. For example, EtherNET (registered trademark) may be adopted for the field network NW1. Here, the field network NW1 is not limited to EtherNET and any communication means may be adopted therefor. For example, the controller 200 and the information processing apparatus 100 may be directly connected through a signal line. The information processing apparatus 100 provides an environment for designing a control program configured to control the robot 300 and machinery in the stage 400. The control program designed in the information processing apparatus 100 is sent to the PLC 200 via the field network NW1.

The PLC 200 controls targets including the robot 300 and the stage 400 by executing the designed control program and providing a target value respectively to the robot controller 310 or the servo driver 13 in accordance with the execution result.

The robot controller 310 and the servo driver 13 are connected to the PLC 200. The PLC 200, the robot controller 310, and the servo driver 13 are connected with a daisy chain via a field network NW2. For example, EtherCAT (registered trademark) may be adopted for the field network NW2. Here, the field network NW2 is not limited to EtherCAT and any communication means may be adopted. Furthermore, a connection mode is not limited to the above daisy chain and other connection modes such as a tree connection or a star connection may also be employed.

The robot 300 and the stage 400 move the workpiece W in cooperation with each other. Note that the movement of the workpiece W will be described for the purpose of simplification of explanation, but the invention is not limited to this movement. For example, the invention may include processing of the workpiece W on the stage 400 using the robot 300.

In FIG. 1, servomotors 14A to 14D (hereinafter also collectively referred to as "servomotors 14") provided in the robot 300 and the robot controller 310 configured to drive the servomotors 14 are exemplified as examples of driving apparatuses of the robot 300. Similarly, the servo driver 13 configured to drive the servomotors 14E and 14F (hereinafter also collectively referred to as "servomotors 14") provided in the stage 400 is exemplified as an example of a drive apparatus for the stage 400. As the robot 300 is driven, a behavior thereof is changed in a three-dimensional space of an X axis, a Y axis, and a Z axis which are orthogonal to each other. As the stage 400 is driven, a behavior thereof is defined in the same three-dimensional space as the robot 300, but is defined in a plane of the X axis and the Y axis.

The drive apparatus is not limited to a servo driver. A corresponding drive apparatus may be adopted depending on a motor serving as a driven apparatus. For example, an induction motor or a synchronization motor may be driven, and an inverter drive or the like may be adopted as the drive apparatus.

The robot controller 310 drives the servomotor 14 of the robot 300. An encoder (not shown) is disposed in a rotary shaft of the servomotor 14. Such an encoder outputs a position (rotational angle), a rotational speed, a cumulative number of rotations, or the like of the servomotor to the robot controller 310 as feedback values of the servomotor 14.

Similarly, the servo driver 13 drives the servomotor 14 of the stage 400. The encoder (not shown) is disposed in the rotary shaft of the servomotor 14. Such an encoder outputs a position (rotational angle), a rotational speed, a cumulative number of rotations, or the like of the servomotor to the servo driver 13 as feedback values of the servomotor 14.

### [B. Control of robot and stage]

Control for the robot 300 and the stage 400 according to the control system 1 will be described hereafter. As described above, the robot 300 and the stage 400 have movable parts which are movable using a plurality of drive shafts. The drive shafts are driven using the servomotor. To be specific, the robot 300 has a plurality of arms driven through rotation of the servomotors 14 (the servomotors 14A to 14D). Each of the servomotors 14 rotates so that the servomotor 14 drives a corresponding arm. The robot controller 310 controls driving of the servomotors 14 so that each arm is three-dimensionally driven. A behavior of the robot 300 is realized through such driving of each arm. Similarly, also in the stage 400, the stage 400 moves through rotation of the servomotors 14 (the servomotors 14E and 14F). An amount of movement thereof (movement direction and distance) is determined based on an amount of rotation (rotational direction and angle) of the servomotors 14. A behavior of the stage 400 is realized through such driving of the servomotors 14.

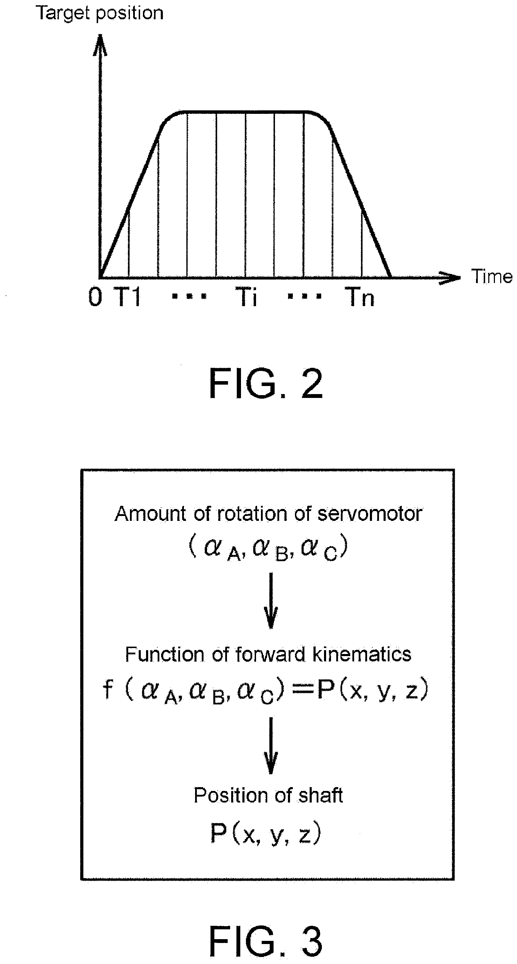

In Embodiment 1, each arm of the robot 300 is associated with a virtual shaft and a position of the robot 300 is determined based on a position of each shaft. FIG. 2 is a diagram for describing a target position of each shaft of the robot 300. Referring to FIG. 2, the target position of each shaft changes in time series so that a behavior of the robot 300 indicates a target behavior (hereinafter also referred to as a "target behavior"). To be specific, each arm of the robot 300 is driven depending on the target position of FIG. 2 changing in time series so that a movement speed and trajectory of each arm change to reach a speed and a trajectory according to a target.

A target position for defining the target behavior of the robot 300 as illustrated in FIG. 2 is stored in the PLC 200 in advance. The robot controller 310 receives a target position from the PLC 200, determines an amount of rotation of each servomotor on the basis of the received target position, and outputs an instruction value for designating the determined amount of rotation to each servomotor of the servomotor 14.

FIG. 3 is a diagram schematically illustrating a process of calculating a position of a shaft corresponding to each arm of the robot 300 according to Embodiment 1 in a three-dimensional virtual space. Referring to FIG. 3, an amount of rotation of the servomotor 14A, an amount of rotation of the servomotor 14B, an amount of rotation of the servomotor 14C, and an amount of rotation of the servomotor 14D are set to αA, αB, αC, and αD, respectively. An amount of rotation of servomotor (αA, αB, αC, and αD) can be changed to reach a position in a three-dimensional virtual space of xyz axes illustrated in FIG. 3 by performing calculation for the amount of rotation of servomotor (αA, αB, αC, and αD) using a predetermined function. In FIG. 3, for example, three-dimensional coordinates P(x, y, z) serving as a position of a shaft of an arm catching the workpiece W in a three-dimensional virtual space are represented, but corresponding three-dimensional coordinates of other shafts can be similarly calculated. Therefore, it is possible to indicate a behavior of the robot 300 in a three-dimensional virtual space by change in time series of three-dimensional coordinates P(x, y, z) of each arm:

Also, in Embodiment 1, for the purpose of simplification of explanation, three-dimensional coordinates P(x, y, z) of a shaft of an arm catching the workpiece W are used for detecting "interference" in a three-dimensional virtual space which will be described below. Note that, in order to detect "interference, " the three-dimensional coordinates P(x, y, z) of another shaft may be used or a combination of three-dimensional coordinates P(x, y, z) of two or more shafts may be used.

Like in the robot 300, the stage 400 also changes in time series so that a behavior of the stage 400 exhibits a target behavior and a movement speed and trajectory of the stage 400 indicate a target position thereof. A target position of the stage 400 is stored in the PLC 200 in advance.

The servo driver 13 determines an amount of rotation of each servomotor on the basis of a target position from the PLC 200 and outputs an instruction value for designating the determined amount of rotation to each servomotor of the servomotors 14. Coordinates of the stage 400 can also be converted into three-dimensional coordinates Q(x, y, 0) in the same three-dimensional virtual space as the robot 300 by performing calculation of an amount of rotation of each servomotor using a predetermined function. A behavior of the stage 400 in a three-dimensional virtual space can be indicated using such change in time series of three-dimensional coordinates Q(x, y, 0).

Note that, here, since the stage 400 exhibits a behavior in a plane, a Z axis of three-dimensional coordinates Q is fixed to a value 0, but may be other fixed values.

### [C. Configuration of simulation apparatus]

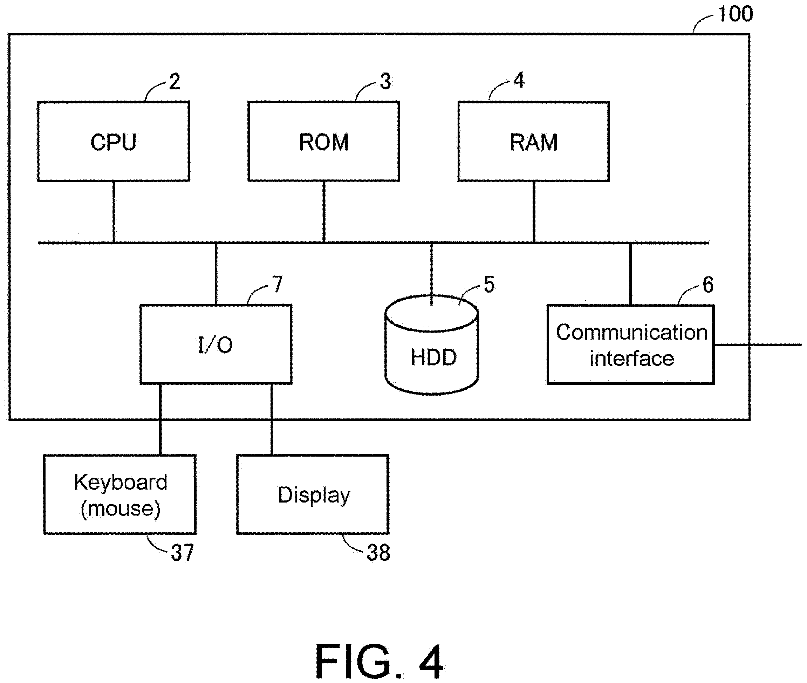

FIG. 4 is a diagram schematically illustrating a configuration of the information processing apparatus 100 according to Embodiment 1. In the control system 1 of FIG. 1, when an environment in which the robot 300 and the stage 400 are controlled by the PLC 200 as actual machines is brought online, the information processing apparatus 100 of FIG. 4 has a function of simulating the control system 1 offline.

The information processing apparatus 100 is a computer system including a central processing unit (CPU) 2 and a storage configured to store a program and data and operating in accordance with the program. The storage includes a read only memory (ROM) 3, a random access memory (RAM) 4, and a hard disk drive (HDD) 5. The information processing apparatus 100 further includes a communication interface 6 and an input/output (I/O) interface 7. Furthermore, the information processing apparatus 100 includes a keyboard 37 and a display 38. The keyboard 37 receives an input including an instruction concerning the information processing apparatus 100 from a user. In order to receive such an input, the information processing apparatus 100 may include other devices such as a mouse.

The communication interface 6 is an interface through which the information processing apparatus 100 communicates with external apparatuses including the PLC 200.

The I/O interface 7 is an interface for input to the information processing apparatus 100 or output from the information processing apparatus 100. As shown in FIG. 4, the I/O interface 7 is connected to the keyboard 37 and the display 38 and receives information input to the keyboard 37 by the user. Furthermore, a processing result of the information processing apparatus 100 is output to the display 38. The display 38 includes a liquid crystal display (LCD) or an organic electro luminescence (EL) display and displays a video or an image according to a video signal or an image signal output from the information processing apparatus 100.

In the control system 1, the storage of the information processing apparatus 100 stores a control program configured to control the robot 300 and the stage 400 online, a program configured to simulate the control system 1, an emulation program configured to emulate behaviors of the robot 300 and the stage 400 offline, and data associated with the programs.

The control program for the robot 300 includes a plurality of commands for controlling a behavior of the robot 300. Similarly, the control program for the stage 400 includes a plurality of commands for controlling a behavior of the stage 400. The emulation program for the robot 300 includes the plurality of commands included in the control program for the robot 300. Similarly, the emulation program for the stage 400 includes the plurality of commands included in the control program for the stage 400. Therefore, a plurality of commands of the control programs for the robot 300 and the stage 400 are executed offline by executing the emulation program using the CPU 2, and the contents in which the execution result of the control program is reproduced can be expressed through the execution result of the emulation program.

The information processing apparatus 100 also functions as a debug apparatus for the control programs realized by using an offline debug system 20 which will be described below. When the offline debug system 20 is started up, the information processing apparatus 100 simulates an operation of the control system 1. In such simulation, the information processing apparatus 100 executes the emulation program configured to emulate the control programs of the robot 300 and the stage 400.

Also, the information processing apparatus 100 draws behaviors of the robot 300 and the stage 400 serving as the emulation result on the same screen when executing the emulation program for the robot 300 and the stage 400 and controls the display 38 so that a plurality of commands of the control programs for the robot 300 and the stage 400 are displayed.

Thus, the user can check behaviors of the robot 300 and the stage 400 estimated by emulating the control programs and commands of the control programs for the robot 300 and the stage 400 realizing such behaviors on the same screen.

### [D. Configuration and function of simulation apparatus]

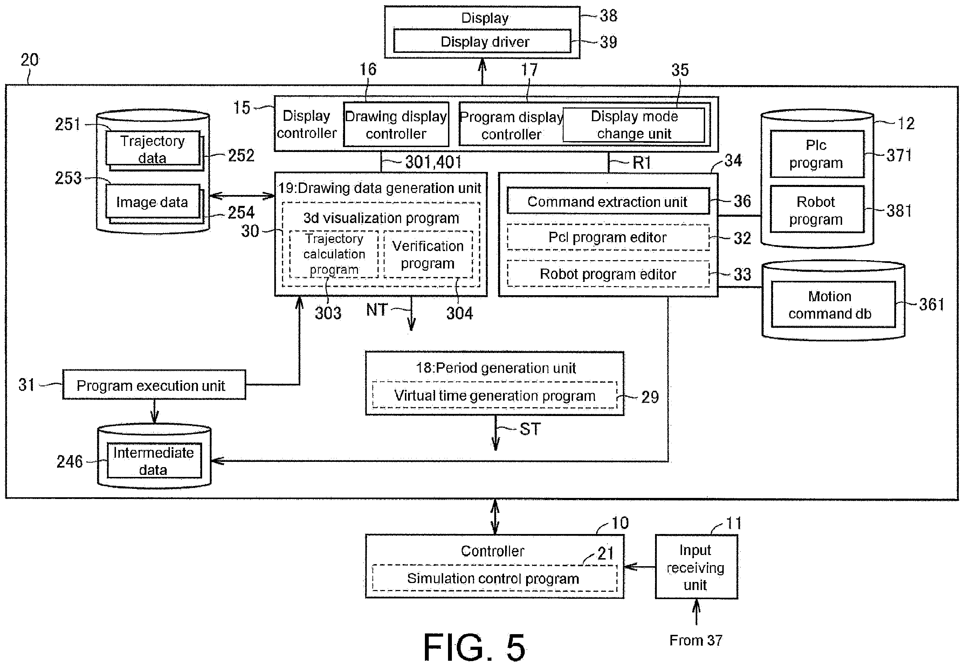

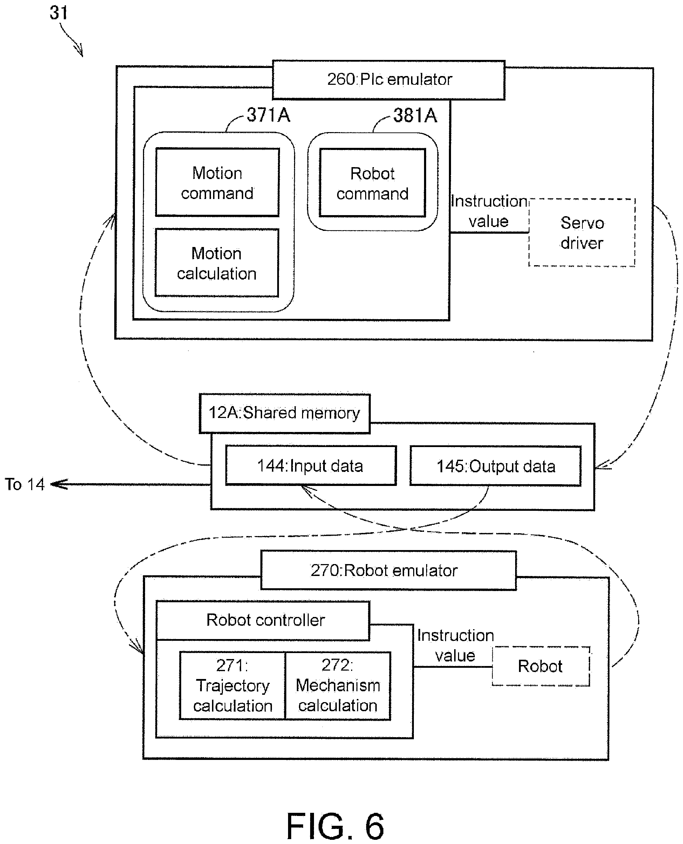

FIG. 5 is a diagram illustrating an example of a configuration of a function of the offline debug system 20 according to Embodiment 1 in association with peripheral parts. FIG. 6 is a diagram illustrating an example of a configuration of a function of a program execution unit 31 of FIG. 5. The information processing apparatus 100 includes a function for simulating the control system 1. Such a simulation function also provides an editing function including debugging of the control programs for the robot 300 and the stage 400.

Referring to FIG. 5, the information processing apparatus 100 includes a controller 10 configured to control each unit of the information processing apparatus 100, an input receiver 11 configured to receive a user input from the keyboard 37, and the offline debug system 20. The display 38 is connected to the offline debug system 20. The display 38 includes a display driver 39 configured to generate image data to be displayed in accordance with display control data and drive the display 38 to display according to the image data. The controller 10 is realized by executing a simulation control program 21 simulated by the CPU 2. The controller 10 controls the offline debug system 20 in response to the user's instruction received via the input receiver 11.

The offline debug system 20 is configured to include a program and data, and a function of the offline debug system 20 is realized by using the program executed by the CPU 2 in accordance with a command from the controller 10. Furthermore, the processing result of the offline debug system 20 is output to the display driver 39 included in the display 38 as display control data. The display driver 39 drives the display 38 to display accordingly in accordance with image data depending on display control data. Thus, images representing the processing results of the information processing apparatus 100 and the offline debug system 20 are displayed on a screen of the display 38.

### (D-1. Configuration of offline debug system 20)

A configuration of the offline debug system 20 will be described. A program and data for realizing each unit of the offline debug system 20 is stored in the storage including the ROM 3, the RAM 4, and the HDD 34.

Referring to FIG. 5, the offline debug system 20 includes the program execution unit 31 configured to execute the above-described emulation program, a drawing data generation unit 19 configured to generate drawing data, a display controller 15 configured to control the display driver 39 on the basis of display control data, a period generation unit 18 configured to generate a periodic signal ST for synchronizing each unit of the offline debug system 20, and a program editing unit 34 configured to edit a control program.

Also, referring to FIG. 5, the offline debug system 20 includes intermediate data 246 indicating results during program execution in relation to the program execution unit 31. In addition, the offline debug system 20 includes trajectory data 251 and 252 and image data 253 and 254 in relation to the drawing data generation unit 19. Furthermore, the offline debug system 20 includes a robot program 381 serving as a control program of the robot 300, a PLC program 371 serving as a control program of the stage 400, and a motion command DB (serving as an abbreviation of database) 361 in relation to the program editing unit 34. The robot program 381 and the PLC program 371 are stored in a storage 12. Each unit and a program and data for realizing each unit in FIG. 5 are stored in the ROM 3, the RAM 4, and the HDD 34. The CPU 2 realizes a function of each unit by executing the stored program.

### (D-2. Emulation using program execution unit)

The program execution unit 31 corresponds to an engine configured to execute an emulator program configured to emulate the PLC program 371 and the robot program 381. Referring to FIG. 6, the program execution unit 31 includes a PLC emulator 260, a robot emulator and a shared memory 12A 270. The PLC emulator 260 is configured to emulate control programs of the PLC 200 and the servo driver 13. The robot emulator 270 is configured to emulate a control program of the robot controller 310. Data exchange between the PLC emulator 260 and the robot emulator 270 is realized by using the shared memory 12A. Data exchange between the PLC emulator 260 and the robot emulator 270 via the shared memory 12A corresponds to data exchange in communication between the PLC 200, the servo driver 13, and the robot controller 310 via, for example, the EtherCAT of the field network NW2.

The PLC emulator 260 is a program configured to estimate behaviors of the robot 300 and the stage 400, which corresponds to an emulation program including a plurality of commands included in the PLC program 371 and the robot program 381. The plurality of commands includes a command group 371A including a motion command and a motion operation instruction for controlling the behavior of the stage 400 included in the PLC program 371 and a command group 381A including a plurality of robot commands for controlling the behavior of the robot 300 included in the robot program 381. The command group 381A and the command group 371A may include other commands such as basic arithmetic operation commands. As will be described below, the PLC program 371 is a program written in a ladder language and the robot program 381 is a program written in an interpreter language. Therefore, the program execution unit 31 includes an emulator execution engine configured to execute programs of such different languages.

Every time each command of the groups of commands 381A and 371A of the PLC emulator 260 is executed on the basis of input data 144 of the shared memory 12A, the above-described instruction value for the servomotor is generated and is stored in the shared memory 12A as output data 145.

Also, the robot emulator 270 corresponds to an emulation program including a command group included in a program of the robot controller 310. Such a command group includes one or more trajectory calculation commands 271 for calculating a target trajectory of the robot 300 on the basis of output data of the shared memory 12A and one or more mechanism calculation commands 272 for calculating an instruction value for each shaft on the basis of the calculated trajectory.

When a command group of the robot emulator 270 is executed on the basis of the output data 145 of the shared memory 12A, the above-described instruction value for each shaft of the robot 300 is generated and is stored in the shared memory 12A as the input data 144.

In this way, the instruction values generated using the PLC emulator 260 and the robot emulator 270 indicate the estimated behaviors of the robot 300 and the stage 400. Furthermore, the PLC emulator 260 and the robot emulator 270 calculate new instruction values on the basis of instruction values calculated by each other. Behaviors based on the instruction values calculated in this way indicate mutual relations in the operations of the robot 300 and the stage 400.

### (D-3. Generation of drawing data)

Referring to FIG. 5, the drawing data generation unit 19 executes a 3-dimensional (3D) visualization program 30 including a trajectory calculation program 303 and a verification program 304. When the 3D visualization program 30 is executed, the drawing data generation unit 19 generates the drawing data 301 and 401 for drawing the emulated behaviors of the robot 300 and the stage 400 on a screen of the display 38 on the basis of the trajectory data 251 and 252 and the image data 253 and 254 indicating the robot 300 and the stage 400. The image data 253 and 254 representing the robot 300 and the stage 400 are indicated by computer-aided design (CAD) data or the like.

The trajectory calculation program 303 calculates three-dimensional coordinates P(x,y,z) and three-dimensional coordinates Q(x,y,0) by performing calculation on the input data 144 of the shared memory 12A in FIG. 6 using a predetermined function and acquires the trajectory data 251 and 252. In this way, the trajectory data is information indicating behaviors of the robot 300 and the stage 400 estimated through emulation in a three-dimensional virtual space. The drawing data generation unit 19 generates the drawing data 301 for stereoscopically drawing a behavior of the robot 300 in a three-dimensional virtual space in accordance with the calculated image data 253 of the trajectory data 251 and the robot 300 and outputs the drawing data 301 to the display controller 15.

Similarly, the trajectory calculation program 303 calculates three-dimensional coordinates Q(x,y,0) in time series by performing calculation on the trajectory data 252 using a predetermined function and stores the three-dimensional coordinates Q(x,y,0) as the trajectory data 252. In this way, the trajectory data 252 is information for stereoscopically drawing a behavior of the stage 400 estimated through emulation in a three-dimensional virtual space. The drawing data generation unit 19 generates the drawing data 401 for stereoscopically drawing a behavior of the stage 400 in the same three-dimensional virtual space as the robot 300 in accordance with the calculated image data 254 of the trajectory data 252 and the stage 400 and outputs the drawing data 401 to the display controller 15.

### (D-4. Verification of information indicating behavior)

The verification program 304 of the drawing data generation unit 19 is a program for carrying out the above-described "verification." The drawing data generation unit 19 verifies coordinates P(x,y,z) serving as positional information indicating a position of the robot 300 indicated by the trajectory data 251 in a three-dimensional virtual space and coordinates Q(x,y,0) serving as positional information indicating a position of the stage 400 indicated by the trajectory data 252 in this three-dimensional virtual space by executing the verification program 304. The drawing data generation unit 19 outputs a notification NT to the display controller 15 and the program editing unit 34 when it is determined that the verification result satisfies a predetermined condition.

In Embodiment 1, the above predetermined condition includes a condition in which a relative relationship between positions of coordinates P(x,y,z) indicating a position of the robot 300 at each time in time series and coordinates Q(x,y,0) indicating a position of the stage 400 corresponding to the time represents a specific positional relationship. Such a specific positional relationship includes a mutual positional relationship in which a behavior of the robot 300 estimated using the emulator in a three-dimensional virtual space and a behavior of the stage 400 "interfere" with each other. For example, a distance between coordinates P(x,y,z) and coordinates Q(x,y,0) in a three-dimensional virtual space includes a case in which such a distance is a specific distance including, for example, a distance equal to or lower than a threshold value. Alternatively, a trajectory connecting coordinates P(x,y,z) and subalternate coordinates P(x,y,z) includes a case in which such a trajectory intersects a trajectory connecting corresponding coordinates Q(x,y,0) and subalternate coordinates Q(x,y,0). Note that a specific positional relationship is not limited to such positional relationships.

### (D-5. Synchronization processing)

The period generation unit 18 according to Embodiment 1 executes a virtual time generation program 29 configured to generate a signal ST. The period generation unit 18 outputs the generated signal ST to other units. Each unit executes processing or a program in synchronization with a period in which the signal ST is output from the period generation unit 18. Thus, processing or a program of each unit of the offline debug system 20 is executed in a period of the signal ST or in synchronization with such a period. A period of the signal ST corresponds to a communication period (hereinafter also referred to as a "control period") of the field network NW2 of the control system 1 in FIG. 1. Note that the communication period of the field network NW2 can be changed and a period of the signal ST can be changed to be synchronized with a changed communication period of the field network NW2.

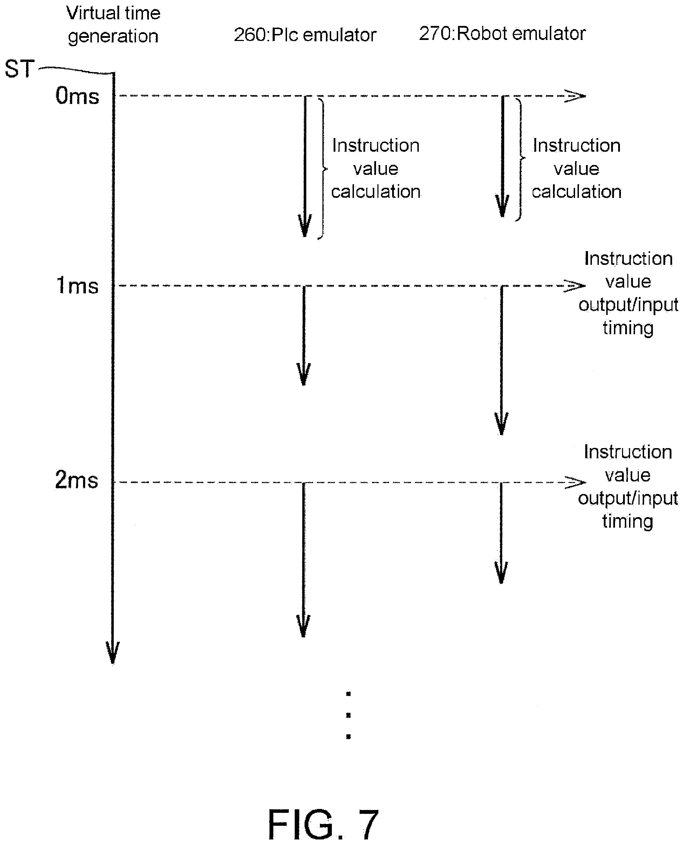

FIG. 7 is a diagram for describing synchronization of the emulator depending on virtual time according to Embodiment 1. Referring to FIG. 7, the period generation unit 18 generates a signal ST with, for example, a period of 1 msec (milisecond) on the basis of an output of a timer (not shown) included in the CPU 2 and outputs the signal ST. The program execution unit 31 causes the PLC emulator 260 and the robot emulator 270 to start calculating an instruction value in accordance with a common period of the signal ST. Thus, the PLC emulator 260 and the robot emulator 270 are periodically carried out in synchronization with a common period indicated by the signal ST. When calculation is started, the PLC emulator 260 calculates an instruction value on the basis of the input data 144 or the robot emulator 270 calculates an instruction value on the basis of the output data 145. The program execution unit 31 outputs (writes) the calculated instruction value to the shared memory 12A for each period.

Thus, each of the PLC emulator 260 and the robot emulator 270 can adjust a timing of outputting the calculated instruction value to a control period even if there is a variation in calculation time required for calculating an instruction value in both of the PLC emulator 260 and the robot emulator 270, that is, even if calculation times are different between the PLC program 371 and the robot program 381. Therefore, both of the PLC emulator 260 and the robot emulator 270 can calculate a new instruction value using an instruction value calculated in the immediately preceding control period in each control period.

The above variation in calculation time between the PLC program 371 and the robot program 381 is based on, for example, types of programming languages of the PLC program 371 and the robot program 381. For example, in Embodiment 1, as will be described below, the robot program 381 is written in a sequential execution type language, the PLC program 371 is written in a cyclic execution type language, and times required for completing execution of one command are different between both programs.

### (D-6. Program editing)

The program editing unit 34 includes a PLC program editor 32, a robot program editor 33, and a command extraction unit 36. The PLC program editor 32 and the robot program editor 33 respectively correspond to editor programs for editing (changing, adding, deleting, or the like) the robot program 381 and the PLC program 371 in response to a user input received by the controller 10 via the input receiver 11.

Also, the program editing unit 34 reads the robot program 381 and the PLC program 371 from the storage and outputs the read programs to the display controller 15. In Embodiment 1, the robot program 381 and the PLC program 371 are source programs and displayed, for example, in text data.
The command extraction unit 36 creates the motion command DB 361.

Also, the program editing unit 34 outputs a change command R1 to the display controller 15 when receiving the notification NT indicating the above verification result as an input from the drawing data generation unit 19. The change command R1 indicates a command to change a display mode of a command (command being executed) extracted at the time of inputting the notification NT.

### (D-7. Processing of display controller 15)

The display controller 15 includes a drawing display controller 16 and a program display controller 17. The drawing display controller 16 generates display control data used to display images representing the behaviors of the robot 300 and the stage 400 from the drawing data 301 indicating the behavior of the robot 300 and the drawing data 401 indicating the behavior of the stage 400 from the drawing data generation unit 19 and outputs the generated display control data to the display driver 39. Furthermore, at the same time, the program display controller 17 generates display control data used to display a plurality of commands indicated by data of the robot program 381 and the PLC program 371 from the program editing unit 34 on the display 38 and outputs the generated display control data to the display driver 39.

Thus, an image used to draw a behavior of the robot 300, an image used to draw a behavior of the stage 400, an image used to display a plurality of commands of the robot program 381, and an image used to display a plurality of commands of the PLC program 371 are displayed on the same screen of the display 38 at the same time.

In addition, when "interference" is detected, an image representing detection of "interference" is displayed on the same screen of the display 38. Therefore, the information processing apparatus 100 can notify of whether the behavior of the robot 300 and the behavior of the stage 400 estimated through emulation "interfere" with each other using images displayed on the display 38 and time (timing) at which "interference" has occurred.

Also, a display mode change unit 35 of the program display controller 17 outputs display control data used to change a display mode of a command being executed when receiving the change command R1 from the program editing unit 34 as an input.

Thus, the information processing apparatus 100 can display the plurality of commands of the emulated robot program 381 and PLC program 371 while instructing a command being executed using the PLC emulator 260. Furthermore, when "interference" is detected, it is possible to display the command being executed in a different display mode from other commands. Thus, it is possible for the user to assist the user in identifying a command that can cause "interference" from commands of the robot program 381 and the PLC program 371.

### (D-8. Stopping processing when "interference" is detected)

In Embodiment 1, when "interference" is detected, the drawing data generation unit 19 outputs the notification NT to each unit.

The program execution unit 31 stops the execution of the emulator when receiving the notification NT as an input. Updating of the trajectory data 251 and 252 is stopped and updating of images representing the behaviors of the robot 300 and the stage 400 in the display 38 is stopped by stopping the execution of the emulator. Furthermore, new extraction of a command being executed is also stopped by stopping the execution of the emulator.

Also, the display controller 15 stops display on the display 38 when receiving the notification NT as an input. Thus, for example, the screen of the display 38 can be set to a screen of a still image at a time at which "interference" is detected even if the execution of the emulator does not stop.

The period generation unit 18 stops the execution of the virtual time generation program 29 when receiving the notification NT as an input. Thus, an output of a signal ST to each unit of the offline debug system 20 is stopped and each unit stops the processing synchronized with the signal ST.

Note that stopping of the processing when "interference" is detected may be carried out by combining two or more kinds of the above-described stop processes.

### [E. Creation of motion command DB]

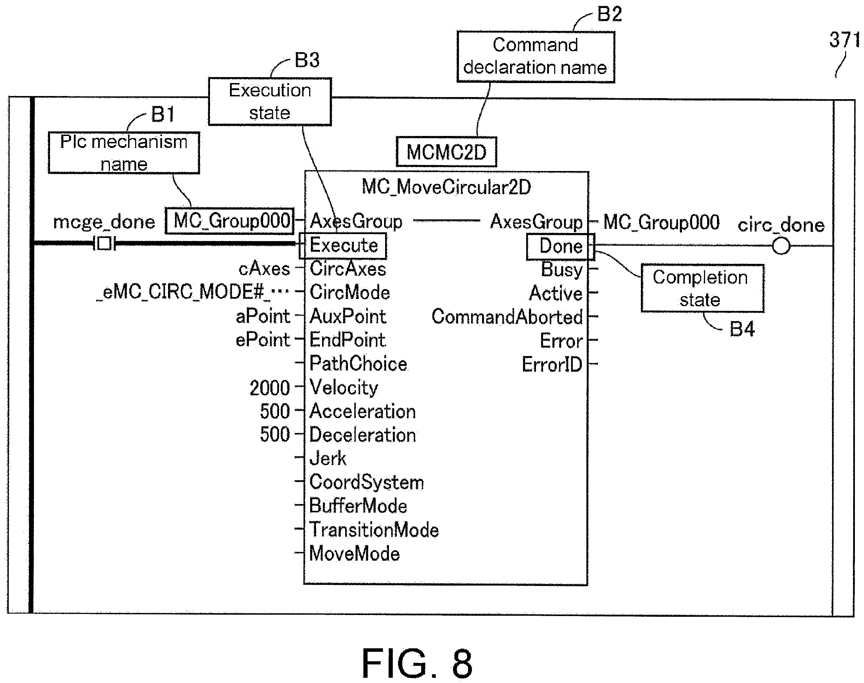

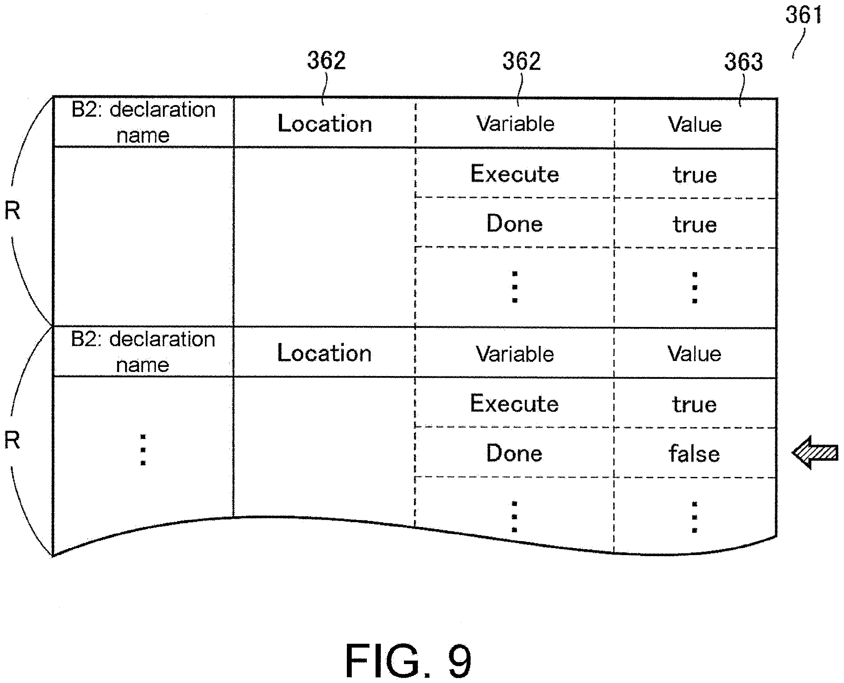

FIG. 8 is a diagram illustrating an example of a motion command according to Embodiment 1. FIG. 9 is a diagram for describing an outline of the motion command DB 361 according to Embodiment 1. In Embodiment 1, for example, the robot program 381 is written in a sequential execution type language such as an interpreter language and the PLC program 371 is written in a cyclic execution type language such as a ladder language or a structured text language. Note that a language writing each program is not limited to such languages.

The robot program 381 and the PLC program 371 differ in time required for executing one step of a command depending on language characteristics. The PLC emulator 260 sequentially executes commands of the command group 381A of the sequential execution type robot program 381 from the beginning thereof. In this case, one command is executed in one period indicated by a signal ST, the next command is not executed until the execution of one command is completed, and the next command is executed in the next period of the signal ST when the execution of one command has been completed. Therefore, it is possible to easily identify a command being executed of the command group 381A and a command executed when "interference" is detected.

On the other hand, the PLC emulator 260 executes a plurality of commands of the cyclic execution type PLC program 371 from the beginning of the program in one period of the signal ST, that is, the beginning of the plurality of commands to the end thereof, but the execution of each command is completed in a period of 1 to N (≥ 2). Therefore, if "interference" is detected, when the PLC emulator 260 stops executing the command group 381A, a stoppage is always performed at a first command of the command group 381A. Therefore, a process of identifying a command being executed when "interference" is detected among the command group 381A is required. In Embodiment 1, the command extraction unit 36 creates the motion command DB 361 for such a process.

Referring to FIG. 8, motion commands included in the PLC program 371 include a PLC mechanism name B1, a command declaration name B2, and variables B3 and B4 indicating execution sates of such motion commands. The variable B3 corresponds to a variable "Execute" indicating whether the execution of the motion command is started and the variable B4 corresponds to a variable "Done" indicating whether the execution of the motion command is completed.

The command extraction unit 36 creates the motion command DB 361. To be specific, the command extraction unit 36 searches for the PLC program 371 and extracts a plurality of motion commands. As illustrated in FIG. 9, the command extraction unit 36 generates a record R obtained by associating the declaration name B2, the location information 362, and values 363 of the variable "Execute" and the variable "Done" with each extracted motion command and stores the generated record R in the motion command DB 361.

The location information 362 of the record R is information uniquely indicating a relative position of such a motion command in the PLC program 371 and includes, for example, a uniform resource identifier (URI). In Embodiment 1, when the PLC program 371 is displayed on the display 38 via the program display controller 17, a position of each motion command on a screen of the display 38 can be identified on the basis of the location information 362.

### [F. Detection processing of command being executed in PLC emulator]

In Embodiment 1, a command being executed by the PLC emulator 260 among commands of the PLC program 371 and the robot program 381 is detected and the result of detection is displayed.

With regard to the PLC program 371, the values 363 of the variable "Execute" and variable "Done" are used for the purpose of detection. To be specific, when the record R is created, initial values (for example, Nulls) are set to the values 363. The program editing unit 34 writes and reads the values 363 of the variable "Execute" and the variable "Done" of each record R. To be specific, the PLC program editor 32 of the program editing unit 34 detects values of the variable "Execute" and the variable "Done" of each motion command from the intermediate data 246 for each period of the signal ST and writes the detected values as values 363 of a record R corresponding to such a motion command of the motion command DB 361. The results of execution of the command groups 371A and 381A using the PLC emulator 260 are written as the intermediate data 246 in synchronization with a period of the signal ST. The results of execution indicated by the intermediate data 246 include values of the variable "Execute" and the variable "Done" of each motion command.

The PLC emulator 260 sets the values 363 of the variable "Execute" and the variable "Done" of each motion command to 'true' and 'false' when the execution of such a motion command is started and then sets both of the values 363 of the variable "Execute" and the variable "Done" to 'true' when the execution of such a motion command is completed. Therefore, it can be determined whether a motion command is being executed (execution is started but has not been completed yet) by extracting a motion command in which values 363 of a variable "Execute" and a variable "Done" are set to 'true' and 'false' from the intermediate data 246.

The PLC program editor 32 writes values of the variable "Execute" and the variable "Done" of each motion command indicated by the intermediate data 246 as values 363 corresponding to such a motion command indicated in the motion command DB 361 in synchronization with a period indicated by a signal ST based on a control period. Thus, the values 363 of the variable "Execute" and the variable "Done" of each motion command of the motion command DB 361 can be updated for each period indicated by the signal ST to indicate the latest value. For example, in the motion command DB 361 of FIG. 9, a motion command indicated by an arrow indicates a command being executed.

Also, in order to detect a command being executed using the robot program 381, the PLC emulator 260 includes a counter configured to count up the counter for each period of a signal ST. To be specific, the PLC emulator 260 executes commands one by one from a first command of the command group 381A for each period of the signal ST and counts up the counter. Therefore, the robot program editor 33 can identify a command being executed among commands of the robot program 381 using the PLC emulator 260 based on a value of the counter. Note that a method for identifying a command being executed among commands of the robot program 381 using the PLC emulator 260 is not limited to a method using such a counter.

### [G. Exemplary of display screen]

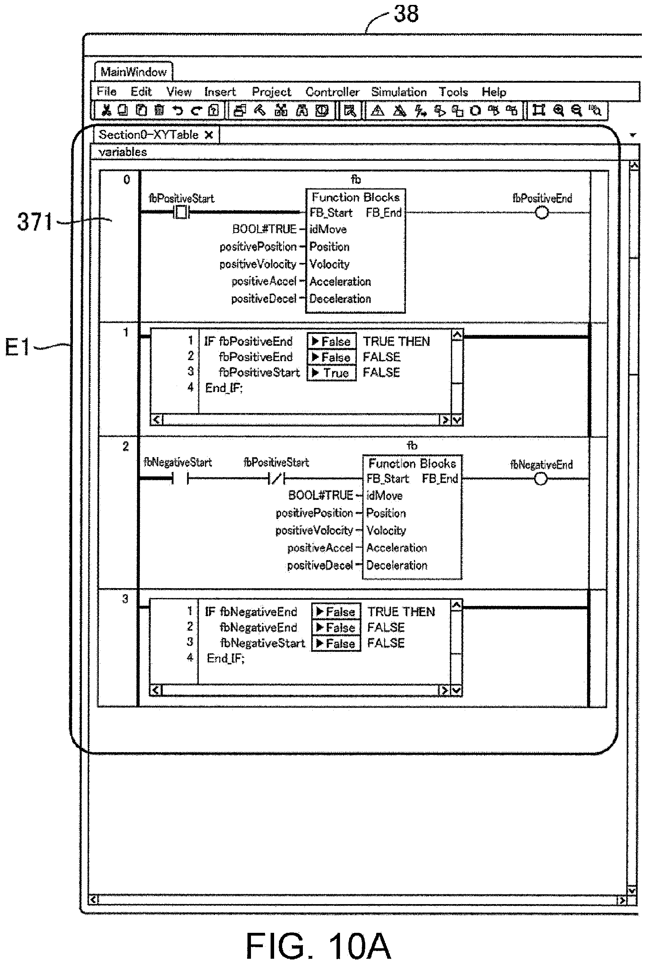

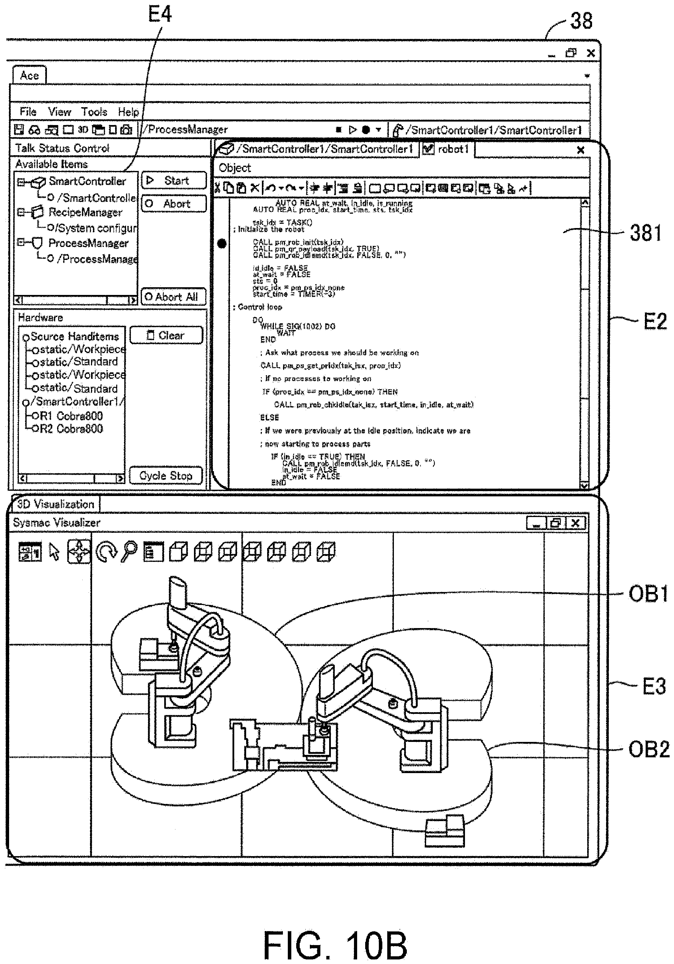

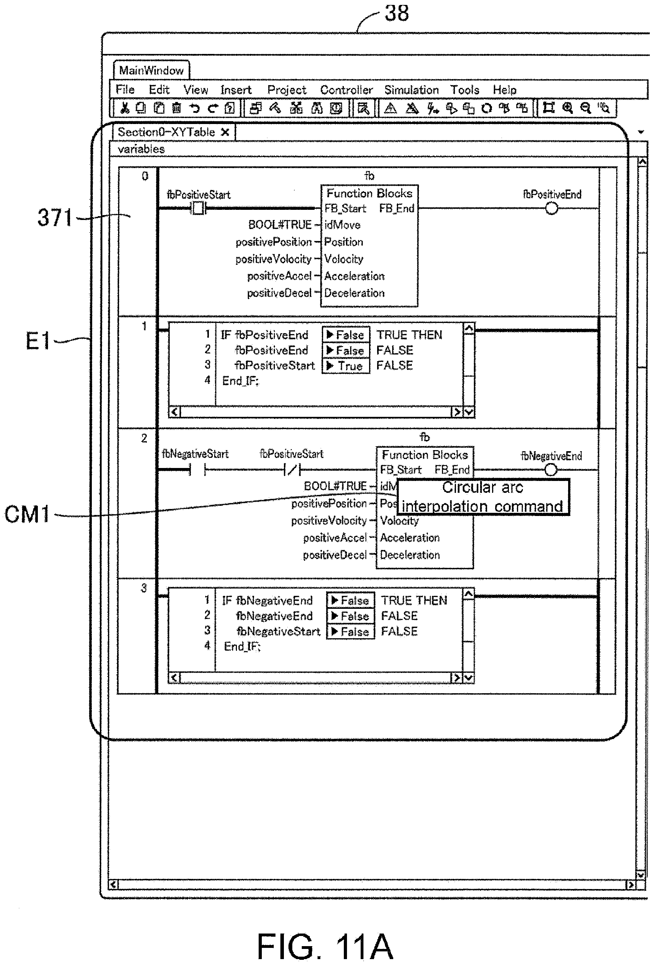

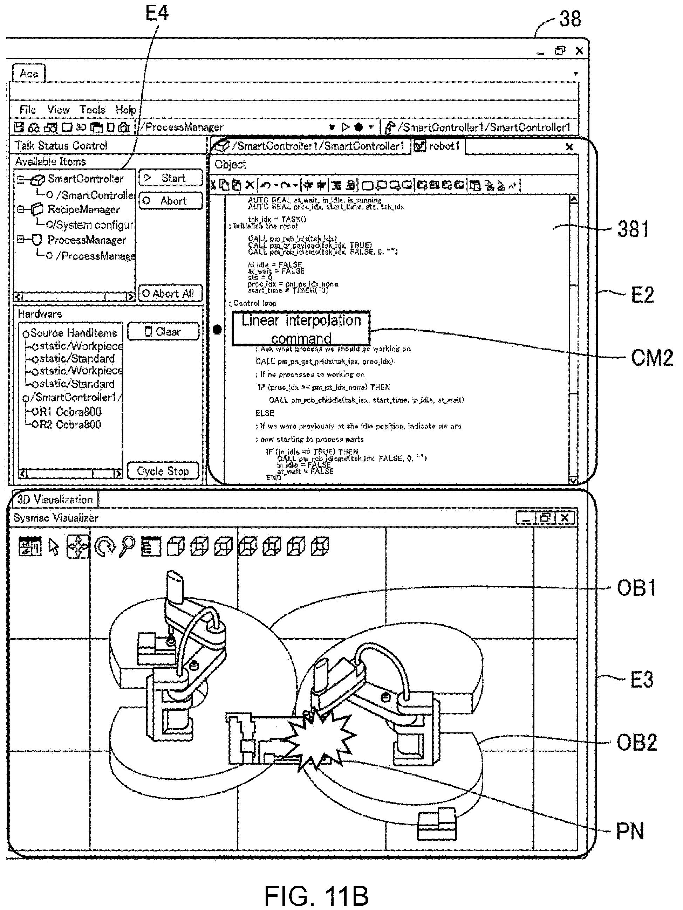

FIGS. 10A, 10B, 11A and 11B (FIGS. 10A and 10B are also referred to as FIG. 10, and FIGS. 11A and 11B are also referred to as FIG. 11 hereinafter) are diagrams illustrating examples of a display screen according to Embodiment 1. The offline debug system 20 displays images illustrated in FIGS. 10A, 10B, 11A and 11B on the display 38, wherein FIG. 10A and FIG. 11A illustrate the left half part of whole display 38, and FIG. 10B and FIG. 11B illustrate the right half part of whole display 38. In other words, FIGS. 10A and 10B together illustrate the whole display 38, and FIGS. 11A and 11B together illustrate the whole display 38. To be specific, the screen of FIG. 10A includes an area E1 in which a command of the PLC program 371 is displayed, an area E2 in which a command of the robot program 381 is displayed, an area E3 in which an image is drawn, and an area E4. Images OBI and OB2 for representing estimated behaviors of the robot 300 and the stage 400 in a three-dimensional virtual space are displayed in the area E3. The area E4 is an area used for receiving selection by the user of a set of a PLC program and a robot program to be emulated as an input. To be specific, a list of names of the PLC program and the robot program serving as emulation candidates is displayed in the area E4. The user can designate a set of a PLC program and a robot program to be emulated from such a list to select the set of the PLC program and the robot program. The program execution unit 31 performs emulation on the selected program.

Note that the above-described selection of the PLC program is not limited to a method using the area E4. For example, the user can selectively designate the PLC program from a "task setting screen" displayed on the display 38 by the offline debug system 20. Furthermore, the above-described selection of the robot program is not limited to the method using the area E4. Selection can be performed by calling the robot program from a command of the PLC program.

The controller 10 outputs the above-described selection contents received via the input receiver 11 to the program editing unit 34. The program editing unit 34 reads the robot program 381 and the PLC program 371 designated by the user from the storage 12 on the basis of the selection contents from the controller 10 and outputs the designated robot program 381 and PLC program 371 to the display controller 15. The program display controller 17 generates display control data based on the robot program 381 and the PLC program 371 from the program editing unit 34 and outputs the generated display control data to the display 38. The display driver 39 displays the robot program 381 and the PLC program 371 in the area E1 and the area E2 on the basis of the display control data. Codes which can be edited by the user such as source codes of the robot program 381 and the PLC program 371 are displayed in the area E1 and the area E2.

FIGS. 11A and 11B illustrate an example of display in a case in which "interference" is detected while the PLC emulator 260 is emulating the robot program 381 and the PLC program 371. A polygon PN of a predetermined color indicating that "interference" is detected in relation to an image of the area E3 is displayed on a screen of FIG. 11B. Such a polygon PN can be displayed in a portion in which interference of the image is detected. A mark displayed in relation to the image indicating that "interference" is detected is not limited to the above-described polygon PN. Furthermore, a command CM1 determined as being executed when "interference" is detected among motion commands of the PLC program 371 of the area E1 is changed in a predetermined different display mode from other motion commands. Similarly, a command CM2 determined as being executed when "interference" is detected among commands of the robot program 381 of the area E2 is changed in a predetermined different display mode from other motion commands.

A predetermined display mode includes, for example, reverse display, blinking display, display of a marker instructing a command, and the like. Furthermore, as illustrated in FIG. 11, information (a circular arc interpolation command, a linear interpolation command, or the like) indicating the contents or type of the command CM1 and the command CM2 determined as being executed when "interference" is detected may be displayed. From the screen of FIG. 11, information on a command which may be a cause of "interference", that is, a command which is a debug candidate can be provided to the user.

The areas E1 to E4 in the screen of the display 38 is not limited to the arrangement of FIGS. 10A, 10B, 11A or 11B. Furthermore, such arrangement can be changed in accordance with the contents of the user's operation.

### [H. Process of offline debug system 20]

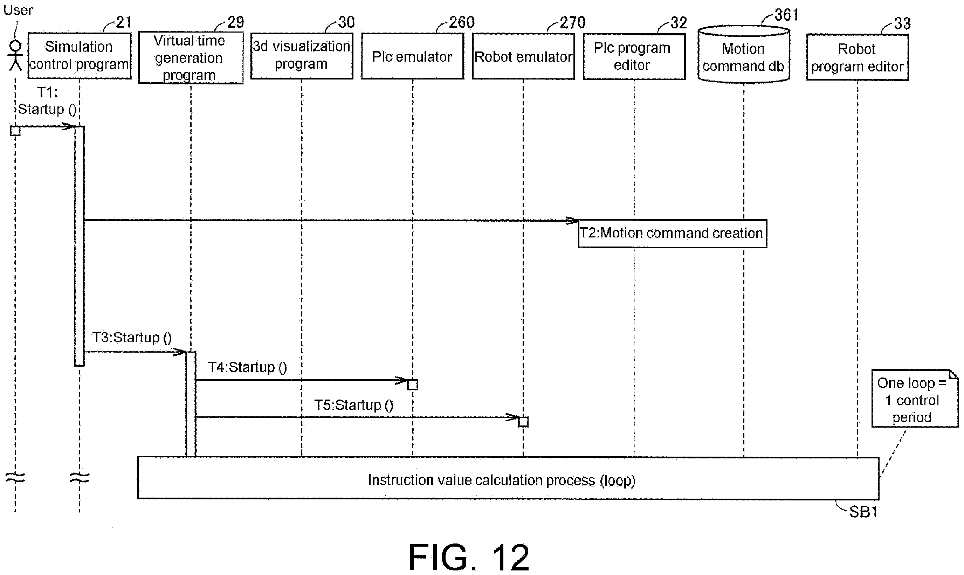

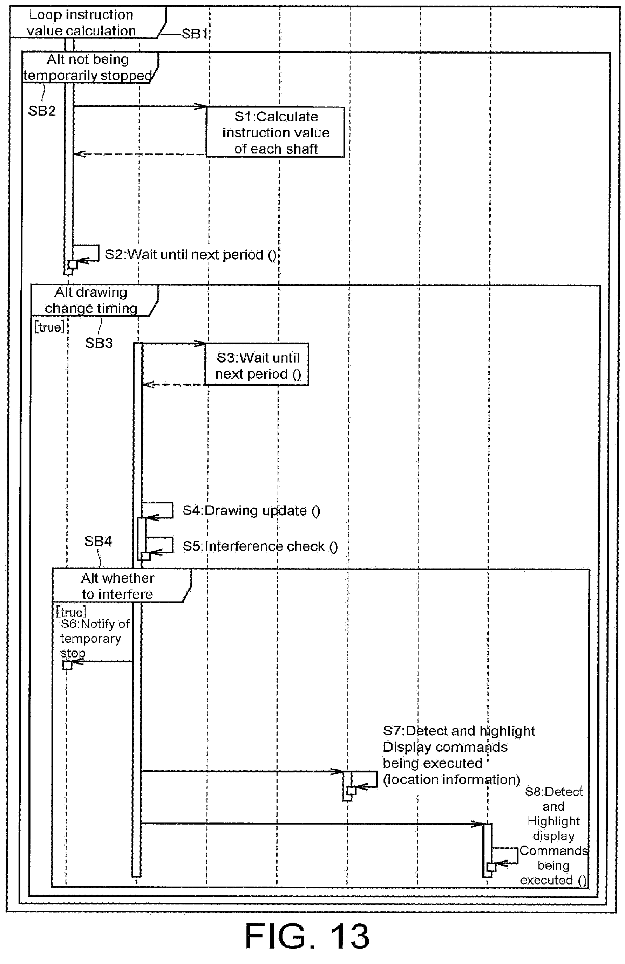

FIGS. 12 and 13 are diagrams for describing a process of the offline debug system 20 according to Embodiment 1. In FIGS. 12 and 13, the process of the offline debug system 20 is illustrated in relation to a timing chart representing an input/output relationship between signals of units.

Referring to FIG. 12, a simulation control program 21 of the controller 10 is started up when receiving a startup command from the user via the input receiver 11 (Step T1) and outputs a command for creating a motion command DB.

The command extraction unit 36 creates a motion command in the above-described motion command DB 361 in response to a command from the simulation control program 21 (Step T2). To be specific, the command extraction unit 36 searches for a motion command from the PLC program 371 of the storage 12, generates a record R having location information of each found motion command, and creates the motion command DB 361 having the generated record R.

The simulation control program 21 of the controller 10 outputs a startup command to the period generation unit 18 (Step T3). The period generation unit 18 starts up the virtual time generation program 29 in response to the startup command. When started up, the virtual time generation program 29 starts outputting a signal ST and outputs a startup command to the PLC emulator 260 and the robot emulator 270 (Steps T4 and T5).

The program execution unit 31 starts up the PLC emulator 260 and the robot emulator 270 in response to the startup command and performs a process SB1 of repeating (looping) an instruction value calculation process for calculating an instruction value in a period of the signal ST. The process SB1 includes processes SB2, SB3, and SB4 illustrated in FIG.13. The process SB1 is performed once in one control period.

Referring to FIG. 13, in the process SB1, first, the simulation control program 21 of the controller 10 determines whether the emulator of the program execution unit 31 is temporarily stopped. The controller 10 skips the subsequent process SB2 when it is determined that the execution of the emulator of the program execution unit 31 is stopped. Thus, the process SB1 ends and a process SB also ends.

On the other hand, the simulation control program 21 of the controller 10 starts the process SB2 when it is determined that the execution of the emulator using the program execution unit 31 is not temporarily stopped, that is, is being executed.

In the process SB2, first, the virtual time generation program 29 of the period generation unit 18 outputs a calculation command to the PLC emulator 260 and the robot emulator 270 of the program execution unit 31. The PLC emulator 260 and the robot emulator 270 of the program execution unit 31 calculates an instruction value of each shaft in response to the calculation command and stores the calculated instruction value in the shared memory 12A as input data 144 (Step S1). The virtual time generation program 29 of the period generation unit 18 waits until a period of the next signal ST (Step S2) when calculation using the program execution unit 31 is completed.

The program execution unit 31 acquires intermediate data 246 indicating results during execution using the PLC emulator 260 for each period of a signal ST and stores the intermediate data 246.

In the process SB3, the drawing data generation unit 19 determines whether it is a timing at which drawing is updated using the 3D visualization program 30. The process SB3 is skipped when it is not determined that it is the timing at which the drawing is updated. Thus, the current process SB ends.

Here, in Embodiment 1, in order to accurately detect a time at which "interference" occurs, a period in which drawing is updated coincides with a control period. Therefore, the process SB3 is performed without being skipped in each control period. Note that, when the process SB3 is performed for each N (≥ 2) periods of the control period, a period in which the process SB3 is skipped can occur. As a result, a load concerning drawing can be reduced as compared with when the process SB3 is performed in all periods.

The drawing data generation unit 19 acquires an instruction value of each shaft calculated using the PLC emulator 260 and the robot emulator 270 when it is determined that it is the timing at which the drawing is updated (Step S3). To be specific, the drawing data generation unit 19 searches for the shared memory 12A using the 3D visualization program 30 and acquires an instruction value from the shared memory 12A. The drawing data generation unit 19 calculates trajectory data 251 and 252 from the instruction value using the 3D visualization program 30 and generates drawing data 301 and 401 from the image data 253 and 254 and the calculated trajectory data 251 and 252. The drawing data generation unit 19 outputs the drawing data 301 and 401 to the display controller 15 to update of an image of the area E3 of the display 38 (Step S4).

The drawing data generation unit 19 performs the above-described verification when updating the drawing contents of the area E3 of the display 38 and determines whether there is "interference" (Step S5).

The drawing data generation unit 19 skips the subsequent process SB4 when it is not determined that there is "interference" and ends the current process SB. On the other hand, the drawing data generation unit 19 outputs notification NT when it is determined that there is "interference" and performs the subsequent process SB4.

In the process SB4, the drawing data generation unit 19 notifies the period generation unit 18 of temporary stop using the 3D visualization program 30 in accordance with the notification NT (Step S6). The period generation unit 18 stops the execution of the virtual time generation program 29 when receiving the temporary stop notification. Thus, an output of the signal ST is stopped and the emulator of the program execution unit 31 is temporarily stopped.

The drawing data generation unit 19 outputs a display instruction for displaying a command being executed to the program editing unit 34 when the command being executed, that is, "interference" is detected. The program editing unit 34 detects a command being executed in response to a display instruction and outputs a change command R1 for displaying the detected command to the display controller 15 (Steps S7 and S8).

To be specific, the PLC program editor 32 of the program editing unit 34 searches a record R in which values 363 of a variable "Execute" and a variable "Done" indicate ('true' and 'false') from the motion command DB 361 and reads a location information 362 of the found record R on the basis of a display instruction from the drawing data generation unit 19. Furthermore, the robot program editor 33 of the program editing unit 34 acquires a value of the above-described counter on the basis of a display instruction from the drawing data generation unit 19. Thus, the PLC emulator 260 acquires information identifying a command being executed when "interference" is detected from commands of the PLC program 371 and the robot program 381.

The program editing unit 34 generates a change command R1 from information ("information including location information 362 and a counter value") identifying a command being executed using the PLC emulator 260 when "interference" is detected and outputs the generated change command R1 to the program display controller 17.

The display mode change unit 35 of the program display controller 17 generates display control data based on the change command R1 and outputs the display control data. The display driver 39 generates image data according to display control data from the display controller 15 and drives the display 38 on the basis of the image data to cause the display 38 to display an image according to the display control data. Thus, display modes of commands CM1 and CM2 being executed are changed to be different from modes of other commands (refer to FIG. 11) when "interference" is detected among a plurality of commands of the robot program 381 and the PLC program 371 being displayed in the areas E1 and E2 of the display 38.

Also, when "interference" is detected, the drawing display controller 16 generates and outputs display control data of a polygon PN with the above-described predetermined color. The display driver 39 displays a polygon PN with a predetermined color in relation to images of behaviors of the robot program 381 and the PLC program 371 of the area E3 of a screen of the display 38 in accordance with display control data from the drawing display controller 16 (refer to FIG. 11).

In this way, the display modes of the commands CM1 and CM2 being executed by the emulator are changed in the screen of FIG. 11 when "interference" is detected. The user can use the commands CM1 and CM2 as assist information for debugging the robot program 381 and the PLC program 371. The user operates the keyboard 37 on the basis of information of the commands CM1 and CM2 and inputs an editing (changing, adding, deleting, or the like) instruction of the robot program 381 and the PLC program 371 being displayed in the areas E1 and E2. The controller 10 receives an editing instruction via the input receiver 11. The program editing unit 34 edits the robot program 381 and the PLC program 371 on the basis of an editing instruction from the controller 10. Thus, the robot program 381 and the PLC program 371 in the storage 12 may be edited (debugged) so that bugs which cause "interference" are eliminated.

The robot program 381 and the PLC program 371 debugged as described above are emulated using the program execution unit 31 so that the user can confirm elimination of "interference" from the screen of the display 38.

### [I. Other display examples]

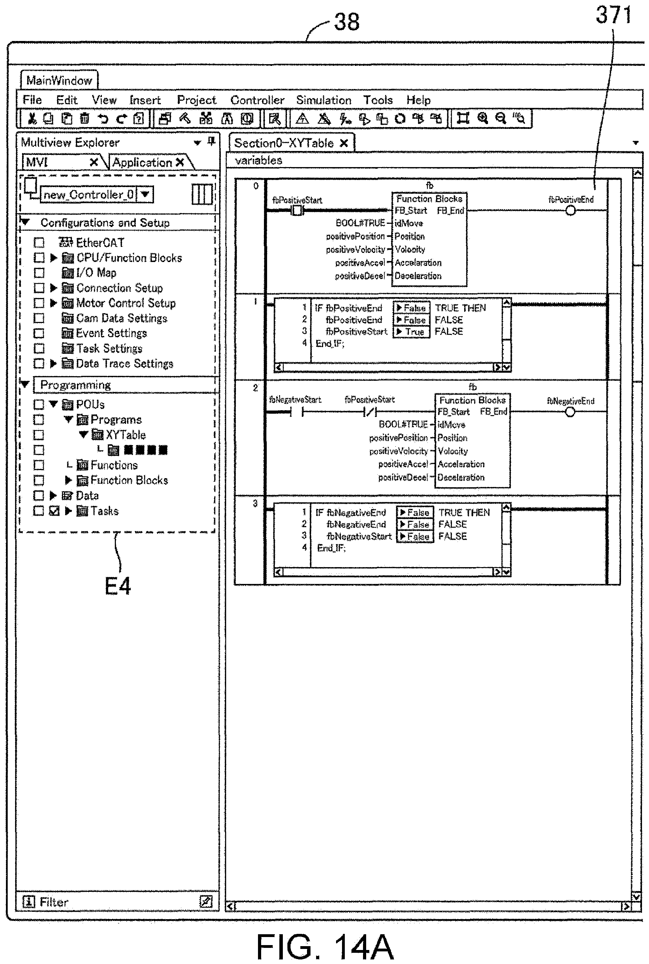

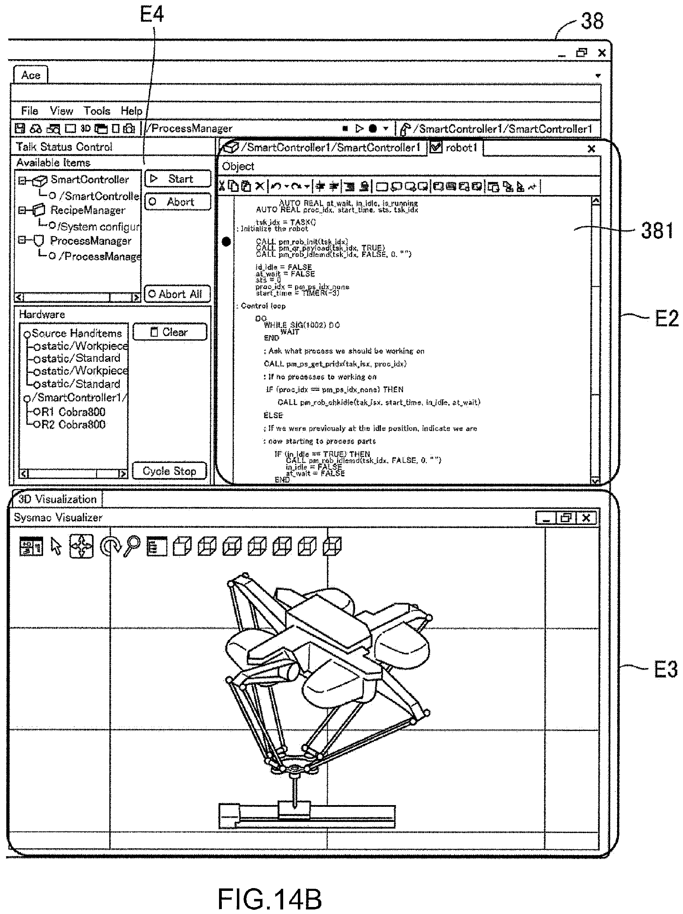

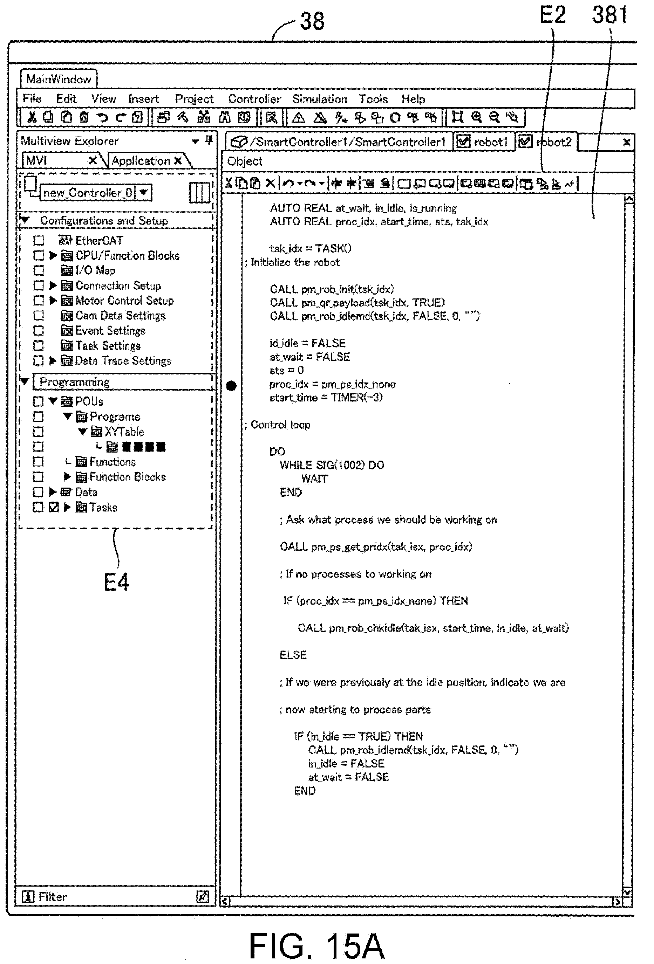

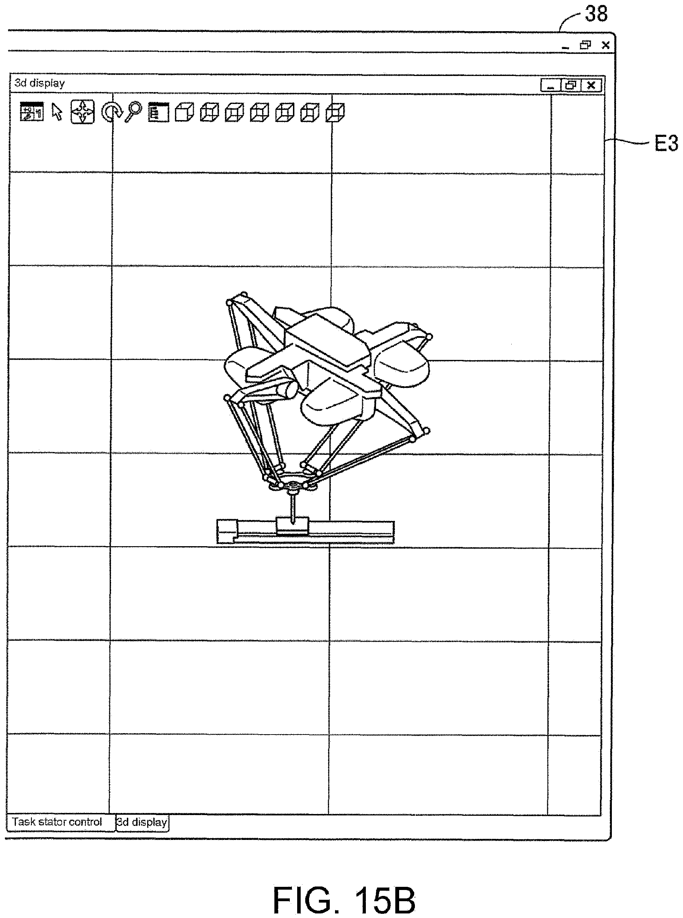

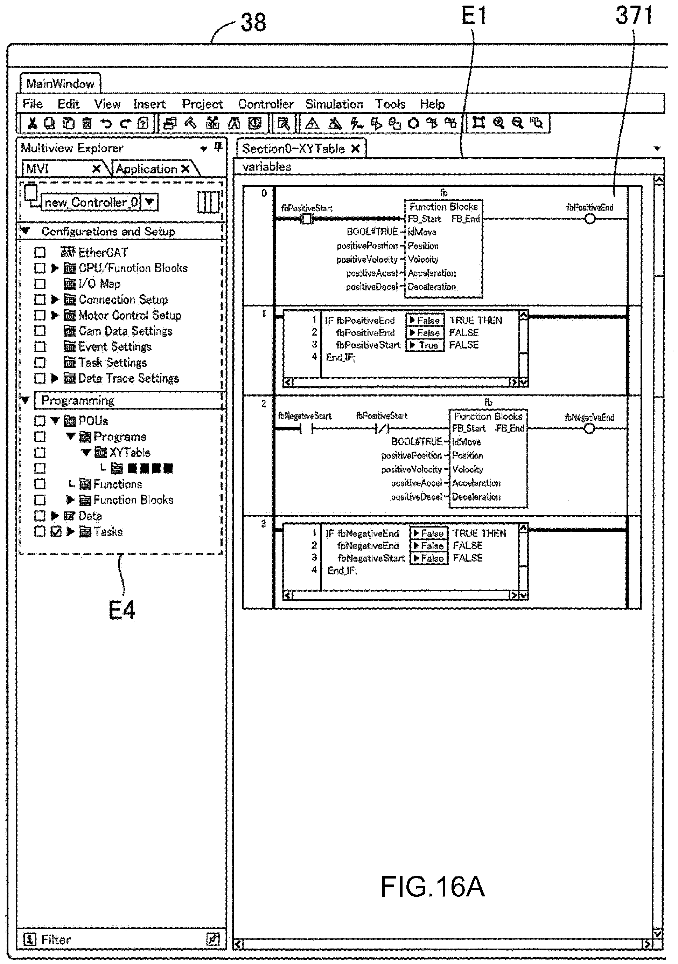

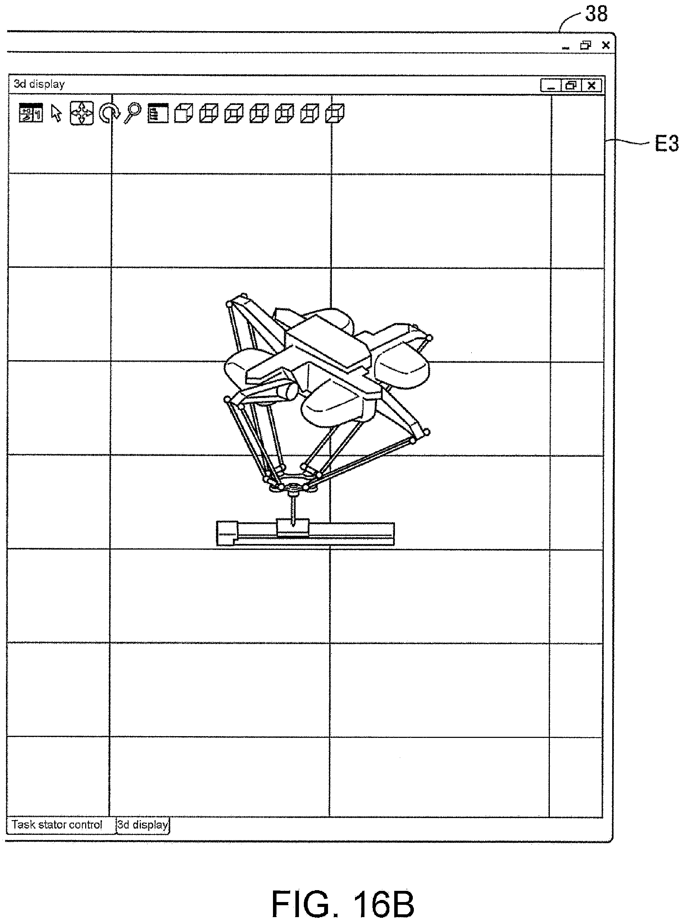

FIGS. 14A, 14B, 15A, 15B, 16A and 16B are diagrams illustrating other examples of a display screen according to Embodiment 1, wherein FIG. 14A and FIG. 15A illustrate the left half part of whole display 38, and FIG. 14B and FIG. 15B illustrate the right half part of whole display 38. In other words, FIGS. 14A and 14B together illustrate the whole display 38 (FIGS. 14A and 14B are also referred to as FIG. 14 hereinafter), FIGS. 15A and 15B together illustrate the whole display 38 (FIGS. 15A and 15B are also referred to as FIG. 15 hereinafter), and FIGS. 16A and 16B together illustrate the whole display 38 (FIGS. 16A and 16B are also referred to as FIG. 16 hereinafter). FIGS. 14A, 14B, 15A, 15B, 16A and 16B illustrate screens when behaviors of a robot and a slider are emulated. The robot of FIGS. 14A, 14B, 15A, 15B, 16A and 16B is of a type of different from that of the robot 300 illustrated in FIGS. 10 and 11 and the slider is illustrated instead of the stage 400, but since the process contents of the offline debug system 20 are the same as those described above, such process contents are not repeated.

FIGS. 14A and 14B together illustrate a case in which the controller 10 selects both of the robot program 381 and the PLC program 371 from a list of the area E4 in accordance with the input contents received by the input receiver 11 from the user. In FIG. 14, the period generation unit 18 starts up the PLC emulator 260 and the robot emulator 270 in response to an instruction from the controller 10 (refer to Steps T4 and T5 in FIG. 12).

FIGS. 14A and 14B together illustrate a case in which both of the PLC program 371 and the robot program 381 are selected from the area E4, but only the robot program 381 is selected from the list of the area E4 in FIG. 15A. As illustrated in FIG. 15, the screen of the display 38 includes the area E2 in which the robot program 381 is displayed and the area E3 in which images indicating behaviors of the robot and the slider are displayed, and the area E1 in which the PLC program 371 is displayed is omitted. In this case, the PLC emulator 260 executes the command group 381A of the robot command and the command group 371A of the PLC program 371 even if the PLC program 371 is not displayed. Images in which the behavior of the slider and the behavior of the robot are drawn are displayed in the area E3, and the above-described polygon PN and command CM2 are displayed when "interference" is detected.

Note that, in FIG. 15 (FIGS. 15A and 15B), the PLC emulator 260 can also execute only the command group 381A of the robot command. In this case, in the area E3, an image drawing a behavior of the robot is displayed in relation to a still image of the slider. For example, when a relative relationship between positions between coordinates of the still image of the slider and coordinates of the drawn robot satisfies a condition in which a specific positional relationship is indicated, "interference" is detected and the above-described polygon PN and command CM2 which are the results of detection are displayed.

FIG. 16 (FIGS. 16A and 16B) illustrates a case in which only the PLC program 371 is selected from the list of the area E4. As illustrated in FIG. 16, the screen of the display 38 includes the area E1 in which the PLC program 371 is displayed and the area E3 in which the images indicating the behaviors of the robot and the slider are displayed, and the area E2 in which the robot program 381 is
displayed is omitted. In this case, the PLC emulator 260 executes the command group 381A of the PLC program and the command group 371A of the PLC program 371 even if the robot program 381 is not displayed. The images in which the behavior of the slider and the behavior of the robot are drawn are displayed in the area E3, and the above-described polygon PN and command CM1 are displayed when "interference" is detected.

Note that, in FIG. 16 (FIGS. 16A and 16B), the PLC emulator 260 can also execute only the command group 371A of the PLC program. In this case, for example, when a relative relationship between coordinates of a still image of the robot and coordinates of the slider whose behavior is drawn satisfies a condition in which a specific positional relationship is indicated, "interference" is detected and the above-described polygon PN and command CM1 which are the results of detection are displayed.

### <Embodiment 2>

FIG. 5 illustrates an example of a configuration in which necessary functions are provided by the CPU 2 of the information processing apparatus 100 executing a program, but all or some of the provided functions may be implemented using a dedicated hardware circuit (for example, an application specific integrated circuit (ASIC), a field-programmable gate array (FPGA), or the like). Alternatively, a main part of the information processing apparatus 100 may be realized using hardware according to a general-purpose architecture. In this case, a plurality of operating systems (OSs) having different uses may be executed in parallel using a virtualization technique and necessary applications may be executed in each OS.

Also, when a plurality of processors such as the CPU 2 are provided, the information processing apparatus 100 can execute each unit illustrated in FIG. 5 using the plurality of processors. Furthermore, when the CPU 2 includes a plurality of cores, each unit illustrated in FIG. 5 can be executed using the plurality of cores in the CPU 2.

### <Advantages of embodiments>

According to the above-described embodiments, the offline debug system 20, a behavior of an actual machine estimated through the execution of the PLC emulator 260 and the robot emulator 270 and each command of the PLC program 371 and the robot program 381 are simultaneously displayed on the same screen. Therefore, it is possible to provide assist information for editing such as debugging the PLC program 371 and the robot program 381 being displayed on the same screen using an image representing the estimated behavior of the real machine.

Also, since a behavior of a target controlled using the PLC program 371 and the robot program 381 is estimated using the emulators (PLC emulator 260 and robot emulator 270) executing commands of the PLC program 371 and the robot program 381, it is possible to more accurately reproduce (draw) the behavior of the target.

When "interference" is detected in the estimated behavior, commands CM1 and CM2 being executed by the emulator at this time are displayed with their display modes changed among commands of the PLC program 371 and the robot program 381 being displayed in the area E1 and the area E2. Therefore, information on commands which cause "interference" can be provided. Furthermore, it is possible to provide accurate assist information (such as correction places of the program or the like) for debugging in the PLC program 371 and the robot program 381 in the area E1 and the area E2. Thus, it is possible to reduce an amount of working and an operation time required for creating a control program of the robot 300 and the stage 400 including debugging.

Also, provision of the above-described debugging assist information is realized by accurately reproducing a timing of "interference" even without the actual machine. Thus, it is possible to provide an environment in which accurate program creation and debugging can be performed even if there is no actual machine.

It is possible to accurately estimate a tact time in the control system 1 because an environment in which an accurate program can be created is provided even without an actual machine. Furthermore, it is also possible to reduce the number of tuning steps using an actual machine of the PLC program 371 and the robot program 381.

### [Reference Signs List]

- 1: Online control system
- 10: Controller
- 11: Input receiver
- 12: Storage
- 12A: Shared memory
- 13, 13E, 13F: Servo driver
- 14, 14A, 14B, 14C, 14D, 14E, 14F: Servomotor
- 15: Display controller
- 16: Drawing display controller
- 17: Program display controller
- 18: Period generation unit
- 19: Drawing data generation unit
- 20: Offline debug system
- 21: Simulation control program
- 29: Virtual time generation program
- 30: Visualization program
- 31: Program execution unit
- 32: PLC program editor
- 33: Robot program editor
- 34: Program editing unit
- 35: Display mode change unit
- 36: Command extraction unit
- 38: Display
- 39: Display driver
- 100: Information processing apparatus
- 144: Input data
- 145: Output data
- 200: programmable logic controller (PLC)
- 246: Intermediate data
- 251, 252: Trajectory data
- 253, 254: Image data
- 260: PLC emulator
- 270: Robot emulator
- 300: Robot
- 301,401: Drawing data
- 303: Trajectory calculation program
- 304: Verification program
- 310: Robot controller
- 371: PLC program
- 371A, 381A: Command group
- 381: Robot program
- 400: Stage
- CM1, CM2: Command
- PN: Polygon
- R1: Change command

## Claims

1. An information processing apparatus comprising:
a storage (3, 4, 5) configured to store control programs of a plurality of targets (300, 400), which include a plurality of commands used to control a behavior of a corresponding target of the targets;
a display controller (15) configured to control a display (38);
an execution unit (31) configured to execute an emulator program configured to estimate a behavior of each of the targets (300, 400), which includes the plurality of commands included in the control program of each of the targets (300, 400); and
a drawing data generation unit (19) configured to generate drawing data for drawing the behaviors of the targets estimated through execution of the emulator program of the targets in a three-dimensional virtual space,
wherein the display controller (15) controls the display (38) so that display of a plurality of commands of at least one of the control programs of the plurality of targets (300, 400) and drawing representing the behaviors of the targets according to the drawing data are performed on a same screen.

2. The information processing apparatus according to claim 1, wherein the execution unit executes the emulator program of the targets (300, 400) in a predetermined common period.

3. The information processing apparatus according to claim 1 or 2, wherein the display controller (15) controls the display (38) so that a display mode of a command being executed by the execution unit (31) is different from those of other commands among the plurality of commands of the at least one control program on the screen.

4. The information processing apparatus according to claim 2 or 3, further comprising:
a verification unit (304) configured to verify the position of each of the targets (300, 400) in the three-dimensional virtual space indicated by the drawing data of the target,
wherein the drawing data of each of the targets (300, 400) includes data indicating a position of the target in the three-dimensional virtual space, and
the display controller controls the display so that the display mode of the command being executed is different from those of other commands when the verification result satisfies a predetermined condition.

5. The information processing apparatus according to claim 4, wherein the predetermined condition includes a condition in which a relative relationship between targets in the three-dimensional virtual space indicates a specific positional relationship.

6. The information processing apparatus according to claim 5, wherein the fact that the relative positional relationship indicates a specific positional relationship includes the fact that a distance between positions indicates a specific distance.

7. The information processing apparatus according to any one of claims 4 to 6, wherein the execution unit (31) stops executing the emulator program of each of the targets (300, 400) when the verification result satisfies a predetermined condition.

8. The information processing apparatus according to any one of claims 4 to 7, wherein the display controller (15) controls the display so that the drawing of each of the targets (300, 400) according to the drawing data is stopped when the verification result satisfies a predetermined condition.

9. The information processing apparatus according to any one of claims 4 to 8, further comprising:
a period generation unit (29) configured to generate a signal indicating the predetermined common period,
wherein the period generation unit (29) stops generation of the signal when the verification result satisfies a predetermined condition.

10. The information processing apparatus according to any one of claims 1 to 9, wherein a program language of at least one of the control programs of the targets (300, 400) is different from program languages of the control programs corresponding to other targets (300, 400).

11. The information processing apparatus according to claims 10, wherein the program language of the at least one control program includes a sequential execution type language.

12. The information processing apparatus according to claims 10 or 11, wherein the program language of the at least one control program includes a cyclic execution type language.

13. The information processing apparatus according to any one of claims 1 to 12, further comprising:
a receiving unit (11) configured to receive a user's input to the information processing apparatus; and
an editing unit (34) configured to edit the control program of each of the targets (300, 400) stored in the storage on the basis of the input received through the receiving unit.

14. An information processing method for processing control programs of a plurality of targets (300, 400), which include a plurality of commands used to control a behavior of a corresponding target of the targets (300, 400) using an information processing apparatus, the information processing method comprising:
executing an emulator program (21) configured to estimate a behavior of each of the targets (300, 400), which includes the plurality of commands included in the control program of each of the targets (300, 400);
generating drawing data for drawing the behaviors of the targets estimated through execution of the emulator program of the targets in a three-dimensional virtual space; and
controlling the display (38) so that display of a plurality of commands of at least one of the control programs of the plurality of targets and drawing representing the behaviors of the targets (300, 400) according to the drawing data are performed on a same screen.

15. A program causing a computer to execute the information processing method according to claim 14.
